# EUROPEAN PATENT SPECIFICATION

(11) **EP 3 897 192 B1**
(45) Date of publication and mention of the grant of the patent: **25.01.2023**
(21) Application number: 19832729.8
(22) Date of filing: 05.12.2019
(51) Int. Cl.: A23L 2/52, A23L 2/60, A23L 27/30, A23L 27/00

(54) **SWEETENER OF NATURAL ORIGIN WITH GUSTATORY PROFILE THAT IMITATES SUGAR WITH FRUITY FLAVOURS WITH UP TO 20TIMES SWEETENING CAPACITY AS COMPARED WITH SUGAR**
SÜSSSTOFF NATÜRLICHEN URSPRUNGS MIT GESCHMACKSPROFIL, DAS ZUCKER IMITIERT, MIT FRUCHTIGEN AROMEN MIT BIS ZU 20-FACHER SÜSSKRAFT IM VERGLEICH ZU ZUCKER
ÉDULCORANT D'ORIGINE NATURELLE AYANT UN PROFIL GUSTATIF QUI IMITE LE SUCRE AVEC DES ARÔMES FRUITÉS AVEC JUSQU'À 20 FOIS LE POUVOIR SUCRANT EN COMPARAISON AVEC LE SUCRE

(30) Priority: 17.12.2018 CZ 20180709
(43) Date of publication of application: 27.10.2021
(73) Proprietor: AGRA GROUP, a.s., 387 15 Strelske Hostice (CZ); Kopenec, Jiri, 130 00 Praha 3, Vinohrady (CZ)
(72) Inventor: DOHNAL, Vlastimil, 40001 Usti nad Labem (CZ)
(74) Representative: Sedlák, Jirí
(86) International application number: PCT/IB2019/060471
(87) International publication number: WO 2020/128704

(56) References cited:
- EP-A1- 2 215 914
- EP-B1- 2 215 914
- WO-A1-2013/133903
- WO-A1-2015/132974
- WO-A1-2017/089444
- US-A1- 2012 157 553
- US-A1- 2018 116 266
- DATABASE GNPD [Online] MINTEL; 19 December 2014 (2014-12-19), anonymous: "Dietary Sweetener Powder", XP055675482, retrieved from www.gnpd.com Database accession no. 2873263
- C. Green: "Thaumatin: A Natural Flavour Ingredient" In: "Low-Calories Sweeteners: Present and Future", 1 January 1999 (1999-01-01), KARGER, Basel, XP055675118, ISBN: 978-3-8055-6938-5 vol. 85, pages 129-132, DOI: 10.1159/000059716, page 129, paragraph 2 - page 131
- DATABASE GNPD [Online] MINTEL; 19 December 2014 (2014-12-19), anonymous: "Dietary Sweetener Powder", XP055675482, Database accession no. 2873263

## Description

### Field of Technology

### Sweeteners of natural origin

### State of the Art

Saccharides are in almost any type of food but only some of them - sugars - have a sweet taste. Monosaccharides, the simplest sugars of all, consist of a single sugar unit. This group contains sugars like glucose (grape sugar) and fructose (fruit sugar). If the saccharides contain two to ten sugar units they are named oligosaccharides. Also, saccharose known as beet or cane sugar belongs in this group - it is disaccharide containing one molecule of glucose and one molecule of fructose. Another disaccharides are maltose (malt sugar) and lactose (milk sugar). Polysaccharides are sugars with more than ten sugar units, and they do not have the sweet taste and do not serve as an instant source of energy in comparison with simple sugars; however, they form stock of energy for our body.

The first man-made sweetener, as well as most others, was discovered by chance. It happened in 1879 thanks to chemists Rems and Fahlberg, who originally synthetised other substances. Saccharine which originated as a by-product, passed into the snack of one of them and sweetened it. So they started to synthetise this substance. Cyclamates and Aspartame were synthetised in a similar chance in 1937, and 1965, respectively.

So that a substance can be added to the list of substitute sweeteners, it must serve to replace sugars for production of food with decreased energy content, of food protecting against dental caries or food without added sugars. They also can serve as a substitute for sugars in cases when this substitution allows to improve food life or to produce food intended as special nutrition. Substitute sweeteners may not be used in nutrition for infants and babies.

### Common sweetening materials

Beet and cane sugar is a disaccharide called saccharose which is a crystal substance with sweet taste which is common in nature and which is an important product of metabolism of green parts of all plants. In our country, we acquire saccharose through industrial processing of sugar beet which contains 17% of saccharose in average, and globally saccharose is produced of sugar cane as well.

In the past, people used honey to sweet food. It was not only used to flavor dishes, but was often sought for its healing effects. Honey is a bee product containing some 40% of fructose in average, 30% of glucose, 1% of saccharose and 9% of other sugars; the rest is water and ash substances. Honey is a quick source of energy but also of vitamins, mostly B and C vitamins, and mineral substances.

While the average inhabitant of the Czech Republic consumes something like 0.8 kg of honey per year, average annual consumption of sugar is about 36 kg per person.

Maple syrup - it is acquired by concentrating blood of sugar maple (Acer saccharum) or silver maple (Acer saccharinum) the blood of which contains two times more sugar (7%). Both leafy trees come from Canada. Production of a single litre of maple syrup requires some 40 litres of blood. The main sweet substance is saccharose, other sugars are present in less quantity.

Wort is a mixture of proteins, mineral substances and lower sugars which raise through hydrolytic digestion of malt within kilning and roasting of malt and subsequent mashing at raised temperature. Different types of wort differ in relative quantity of sugars above all due to different way and intensity of thermal treatment within kilning and roasting of malt when concentration of reducing saccharides markedly rises due to residual amylolytic activity. The saccharides enter reactions linked to non-enzymatic browning under final temperature of kilning where aromatic and flavour substances are produced, which makes marked differences among the types of wort. Light wort contains 3% of glucose, 0.4% of fructose, 4% of saccharose, 43% of maltose and 7% of maltotriose. On the other hand, for example caramel wort contains 5% of glucose, 0.2% of fructose, 3% of saccharose, 20% of maltose and 6% of maltotriose.

Liquid wort with 80% of dry matter, or dried wort with 98% of dry matter contains above all maltose (50-56% in liquid, and 55-62% in dried malt extract) and glucose (8-10% in concentrated, and 9-11% in dried wort), 4 to 7% of proteins and 1 to 1.2% of mineral substances. These data show that wort contains 58-66% sugars in concentrated wort and 64-73% sugars in dried wort, at least.

Relative sweetening capacity of wort is one third (according to calculation based on saccharide composition) to half (according to some internet sources) when compared with sugar. This means that 2-3times quantity of wort is necessary to achieve the same sweetness as compared with sugar. Because of sweetening capacity and energy contained in wort, it cannot be considered as a non-nutritive sweetener.

### Substitute sweeteners

Also substitute sweeteners can be used to provide sweet taste of food. They belong among so called additives (e-substances) that are fixed in the rules of Regulation of the European Parliament and Council No. 1333/2008, as amended.

Substitute sweeteners can be natural or synthetic (called also man-made) but the meaning of these words can be misleading. "Some sweeteners, for example sorbitol, do appear in the nature but they are produced in the synthetic way for industrial application. Such sweeteners are called nature identical."

It is worth to mention that the food producers avoid the term "substitute " and you cannot find it on labels. "Only the term sweeteners is allowed to be used for substances used as sugar substitutes. According to the producers of food that contains these sweeteners, the term substitute is discriminating and it recalls surrogate and not an A-grade product. Therefore, we can find only the term "sweetener" completed with an E-code or chemical name of the sweetener on the food package," professor Dostálová has explained.

According to order of the Czech Health Ministry No. 4/2008 Coll., and Commission Regulation (EU) No. 1129/2011, 17 substitute sweeteners in total are allowed in the Czech Republic. These can be classified according to their nutritional values as energy (volume) and non-energy (non-nutritive) ones. The first group consists of substances of sweetening capacity similar to saccharose, thus similar quantity is used for sweetening as in the case of classic sugar. In the case of non-nutritive sweeteners, they are substances of very intensive taste, and a small quantity of them is able to substitute a big amount of sugar. You will find overview of sweetening capacity of various sweeteners together with their trade names and E-symbols in the table, and properties of selected sweeteners in the next part.

Acesulfame K otherwise known as potassium acesulfame is a synthetic sweetener with code E 950. Acesulfame is about 200x sweeter than saccharose and has slightly bitter foul taste. It is mainly used in production of sweetened mineral waters, deserts and yoghourts. It does not metabolise in human body and it is secreted unchanged. The trade names of the sweetener are Sunett, SweetOne, NutriNova, Supra-Sweet and DiaVita.

Aspartame (E 951) belongs among the most famous synthetic sweeteners. It is about 200x sweeter than saccharose and in comparison with some others sweeteners, it has almost no foul taste. The results of studies investigating health safety differ particularly in case of this sweetener but EFSA has not confirmed harmfulness of Aspartame, yet. We know, however, that phenylalanine is among its metabolites, and people suffering from phenylketonuria shall not consume phenylalanine. Therefore, the fact that phenylalanine is present must be indicated on the packaging of the product containing aspartame. Aspartame is mainly used as sugar substitute in non-nutritive drinks, soft drinks, chewing gums and in some milk products. Toxic products rise within thermal treatment like baking etc. It is marketed under trade names Nutra-Sweet, Canderel, Equal, Fansweet and Irbis.

In Czech, saccharin (E 954) is also known as cukerin. It is about 500x sweeter than saccharose and it is one of the cheapest sweeteners. If used, it is mostly combined with other sweeteners because it has bitter foul taste. It is used in production of dietetic food because it is fully non-caloric sweetener, it is also added into chewing gums, toothpaste and mouthwash. Saccharin is marked with trade names SugarSweet, Sweet-Twin, Daimant, Sweet'NLow, Sualin and Dianer.

Thaumatin (E 957) is a non-nutritive protein substance isolated from fruit shrub Thaumatococcus daniellii growing in West Africa. Thaumatin is up to 3000x sweeter than saccharose. It is used to sweet frozen products, sweets, jams, chewing gums, soft drinks, yoghourts and other food. The trade names are Talin and AmCaSuctin. Thaumatin is acquired through water extraction (pH 2.5 to 4) of fruit ovaries. It mainly contains proteins thaumatin I and thaumatin II, and a small amount of plant components coming from the original material. Thaumatin in fruit is generated in response to an attack upon the plant by viroid pathogens. Sweet taste of thaumatin markedly differs from the sweet taste of sugar - it develops very slowly but the sensation lasts long, and it recalls foul taste after licorice in high doses. Thaumatin is frequently used for its ability to modify (amplify) taste of other substances. Thaumatin is fully a natural substance, it metabolises as any other dietetic protein in the body. Due to high sweetening effect, it is used in small doses. Energy input from this quantity is negligible. It is highly soluble in water, thermally stable even under acid conditions. Steviol-glycosides (E 960) are the most recently added substance to the list of substitute sweeteners. E 960 is used to sweet drinks, for example, it also is added into tooth paste. The trade names are for example Rebiana, Truvia and Pure Via. It is acquired from leaves of plant *Stevia rebaudiana* and it does not metabolise in a human body. *Stevia rebaudiana* Bertoni - stevia, a white flowering tropical plant native to South and Central America, is also named sugar stevia or sweet leaf. It is almost non-caloric, suitable also for diabetics, and it does not contribute to formation of dental caries. A group of sweet glycosides is acquired of the whole plant, with the exception of the root. The main component is stevioside which is up to 300x sweeter than saccharose. Extract of stevia is a common article in shops and it can be used as a substitute for beet sugar. Dry matter of leaves contains up to 15% of steviol-glycosides, in the composition as follows: stevioside - 4 to 13%, rebaudioside A - 2 to 4%, rebaudioside C - 1 to 2%, dulcoside A - 0.4 to 0.7%. Further, there are rebaudiosides B, D, E and F, and steviolbioside but they are represented in very small to negligible quantities.

| **Trivial name** | **Chemical formula** | **Conversion factor** |
|---|---|---|
| Steviol | C₂₀H₃₀O₃ | 1.00 |
| Stevioside | C₃₈H₆₀O₁₈ | 0.40 |
| Rebaudioside A | C₄₄H₇₀O₂₃ | 0.33 |
| Rebaudioside C | C₄₄H₇₀O₂₂ | 0.34 |
| Dulcoside A | C₃₈H₆₀O₁₇ | 0.40 |
| Rubusoside | C₃₂H₅₀O₁₃ | 0.50 |
| Steviolbioside | C₃₂H₅₀O₁₃ | 0.50 |
| Rebaudioside B | C₃₈H₆₀O₁₈ | 0.40 |
| Rebaudioside D | C₅₀H₈₀O₂₈ | 0.29 |
| Rebaudioside E | C₄₄H₇₀O₂₃ | 0.33 |
| Rebaudioside F | C₄₃H₆₈O₂₂ | 0.34 |

The latest sweetener is mogroside V, an extract isolated of luo-han-guo (Siraitia grosvenorii, monk fruit). It is now under the approval process as a food additive and it shall acquire its E-code. Mogroside V has its sweetening capacity of approximately 250x higher than sugar. (The biosynthetic pathway of the nonsugar, high-intensity sweetener mogroside V from Siraitia grosvenorii, Maxim Itkin, Rachel Davidovich-Rikanati, Shahar Cohen, Vitaly Portnoy, Adi Doron-Faigenboim, Elad Oren, Shiri Freilich, Galil Tzuri, Nadine Baranes, Shmuel Shen, Marina Petreikov, Rotem Sertchook, Shifra Ben-Dor, Hugo Gottlieb, Alvaro Hernandez, David R. Nelson, Harry S. Paris, Yaakov Tadmor, Yosef Burger, Efraim Lewinsohn, Nurit Katzir, and Arthur Schaffer, PNAS November 22, 2016 113 (47) E7619-E7628; November 7, 2016)

Xylitol (E 967) is a sweetener containing one third less calories as compared with saccharose. In the food industry, it is not only used as a sweetener but also as a stabiliser, moisture or a filling agent. It creates a cool feeling in mouth and it does not cause dental caries, therefore it is used for example in production of chewing gums, sweets, ice, pastilles or a tooth paste. Formerly, xylitol was produced of birch wood, currently it is acquired of corn, raspberry and plum. If its quantity in food exceeds 10%, the package shall present that "excessive consumption can cause purgative effect". The trade names are Puritol and Xyli-Smart.

Sucralose (E 955) is a substitute sweetener distinguished by the fact that it has approximately 500-600x higher sweetening capacity than saccharose. It also belongs among the most thermally stable substitute sweeteners but it is also the most expensive one. Sucralose is used in the production of sweets, breakfast bars and soft drinks. The trade name is Splenda.

Neotame (E 961) is non-caloric substitute sweetener which is up to 13 000x sweeter than saccharose. The sweet taste of neotame is perceived in receptors much longer. The properties of this sweetener are used in the production of deserts, ice creams and sweets.

Food with low energy value is such a food that does not contain more than 40 kcal (170 kJ)/100 g in case of food of solid consistency or over 20 kcal (80 kJ)/100 ml in case of fluid. In case of table sweeteners, limit of 4 kcal (17 kJ) per mess is used, with sweet properties corresponding to 6 g of saccharose (approximately 1 tea spoon of saccharose ).

Patent document US 20120164083 has described Sweetness Enhancers Including Rebaudioside A and/or D mainly combined with saccharose.

Document XP055675482 (retrieved from www.gnpd.com, Database accession no. 2873263) discloses a powdered sweetener composition of natural origin with gustatory profile that imitates sugar with 10 times higher sweetening capacity as compared with sugar comprising thaumatin and stevia as main sweetener compounds.

Patent document WO 2015/132974 A1 describes an unfermented beer-flavored beverage that contains 10 g/1 or more of indigestible dextrin and has a pH value of 3.0-4.0. This beverage has a wellbalanced beer-like flavor, namely, a "rich feeling during passing the throat" and a "crisp aftertaste".

Patent document WO 2017/089444 A1 provide a method of improving a taste profile of a glucosylated terpene glycoside (GTG) by forming a mixture comprising glycosylated steviol glycosides wherein the average number of glucose units of the GTG in the GTG cereal mixture is reduced.

Document of C. Green: "Thaumatin: A Natural Flavour Ingredient" In: "Low-Calories Sweeteners: Present and Future", 1 January 1999 (1999-01-01), KARGER, Basel, XP055675118, ISBN: 978-3-8055-6938-5 vol. 85, pages 129-132, DOI: 10.1159/000059716 describes a sweet protein thaumatin and its potential for using in various food field as a flavour modifier.

Patent document US 2012/157553 A1 also direct to a flavor modifiers, namely to use of one or more rebaudioside C polymorphs, or stereoisomers thereof, to enhance the sweet taste of a flavoring, such as glucosylated steviol glycoside, rebaudioside A, annnoniated glycyrrhizin, neohespherdin dihydrochalcone or thaumatin.

Patent document EP2215914 A1 provides a technique for improving the sweetness of stevia extract. A composition having an excellent sweetness quality can be obtained by combining rebaudioside A, which is a main sweetness component of stevia extract, with mogroside V, which is a main sweetness component of siraitia grosvenorii extract, at a weight ratio of 95:5 to 60:40.

### Non-nutritive sweeteners allowed in EU^{24,25}

| Sweetener | Trade name | Symbol E | Sweetening capacity compared with saccharose | ADI^{b} | Maximum dose^{b} |
|---|---|---|---|---|---|
| Acesulfame-K | Sunett, Sweet One | E950 | 200 | 9 | 250-2000 |
| Aspartame | Nutrasweet, Equal | E951 | 180-200 | 40 | 25-6000 |
| Cyclamate | Clio, Kandisin, | E952 | 30 | 7 | 250-2500 |
| Sacharin | Dukaril, Spolarin, Sweet'n low, Sweet Twin | E954 | 300-500 | 5 | 80-3000 |
| Sucralose | Splenda | E955 | 600 | 15 | 50-3000 |
| Thaumatin | Talin | E957 | 2000-3000 | not determined | 50-400 |
| Neohesperidin dihydro-chalcone | NHDC, Neo-DHC | E959 | 1900 | 5 | 10-400 |
| Steviol-glycoside | | E960 | 200-300 | 4 | |
| Neotame | | E961 | 7000-13000 | 2 | |
| Aspartame-acesulfame | Twinsweet | E962 | 350 | 9 | 25-2500 |

| | | | | | |
|---|---|---|---|---|---|
| ^{a} Relative sweetening capacity can differ according to type of drink or food ; ^{b} mg/day.kg of body weight | | | | | |

### Volume sweeteners allowed in EU

**^{a} Relative sweetening capacity can differ according to type of drink or food (Náhradní sladidla, Copíková J., Moravcová J., Wimmer Z., Chem. Listy 107, 867-874 (2013) )**

| Sweetener | Trade name | Symbol E | Sweetening capacity compared with saccharose^{a} |
|---|---|---|---|
| Sorbitol and sorbitol sirup | Glucitol, Dulcin | E420 | 0.5-1 |
| Mannitol | | E421 | 0.5-0.7 |
| Isomalt | Palatinit | E953 | 0.5 |
| Maltitol and maltitol sirup | | E965 | 0.9-1 |
| Lactitol | Galactosyl-glucitol | E966 | 0.5 |
| Xylitol | Birch sugar | E967 | 1 |
| Erythritol | | E968 | 0.6-0.8 |
| Corn sirup with high content of fructose | HFSC | --- | 1 |

### Characteristic properties of sweeteners

| Sweetener | Sweetening capacity' | Glycemic index | cal/spoon ^{j} | Sweetener | Sweetening capacityⁱ | Glycemic index | cal/spoon ^{j} |
|---|---|---|---|---|---|---|---|
| Acesulfam-K | 200 | 0 | 0 | Luo Han Guo | 300 | 0 | 0 |
| Agave sirup^{a} | 1.5 | 15 | 10 | Maltitol | 0.9 | 35 | 11 |
| Aspartame | 180 | 0 | 0 | Maltose | 0.3 | 105 | 53 |
| Brazzein | 1 | 0 | 0 | Mannitol | 0.5 | 2 | 13 |
| Cyclamate | 40 | 0 | 0 | Honey | 1.1 | 50 | 14 |
| Sorghum sirup^{b} | 1 | 50 | 15 | Monellin | 1.5 | 0 | 0 |
| Dextrose | 0.75 | 100 | 21 | Neotame | 8 | 0 | 0 |
| Erythritol | 0.65 | 1 | 1 | Pentadin | 500 | 0 | 0 |
| Fructose | 1.7 | 23 | 9 | Sacharin | 300 | 0 | 0 |
| Galactose | 0.3 | 23 | 53 | Sacharose | 1 | 65 | 16 |
| Glukose | 0.75 | 100 | 21 | Sirup of brown rice^{f} | 0.5 | 25 | 32 |
| HFCS-42 | 1.1 | 68 | 14 | Sirup of barley malt^{g} | 0.5 | 42 | 32 |
| HFCS-55 | 1.2 | 58 | 13 | Sorbitol | 0.55 | 4 | 19 |
| HFCS-90 | 1.6 | 31 | 10 | Stevia | 300 | 0 | 0 |
| HSH^{c} | 0.4 | 36 | 30 | Sucralose | 600 | 0 | 0 |
| Isomalt | 0.5 | 2 | 17 | Tagatose | 0.92 | 0 | 7 |
| Maple sirup^{d} | 1 | 54 | 15 | Thaumatin | 2 | 0 | 0 |
| Cocos sugar^{e} | 1 | 35 | 15 | Trehalose | 0.45 | 70 | 36 |
| Lactitol | 0.4 | 3 | 20 | Xylitol | 1 | 12 | 10 |
| Lactose | 0.15 | 45 | 107 | Golden sirup^{h} | 1.1 | 60 | 15 |

| | | | | | | | |
|---|---|---|---|---|---|---|---|
| ^{a} Agave sirup after hydrolysis of more complex sugars in agave juice (Agave tequilana, A. salmiana, pin a) mainly contains 56 to 92% of D-fructose and 8-20% of D-glucose. ^{b} Sorghum sirup contains usually about 46% of saccharose, 16% of D-glucose and 13% of D-fructose but also some 3% of fat and 10% of proteins and 2.5% of minerals. ^{c} HSH is hydrogenated starch hydrolyzate with high content of sorbitol and maltitol. **^{d}** Maple sirup of maple blood mainly contains saccharose. ^{e} Cocos sugar of coco blood mainly contains saccharose with addition of D-fructose and D-glucose. ^{f} Sirup of brown rice is a fermented and concentrated product of boiled rice containing 45% of maltose, 3% of D-glucose and 52% of maltotriose. ^{g} Sirup of barley malt is produced of sprouted barley (malt) and it contains 65% of maltose, 30% more complex saccharides and 3% of protein. ^{h} Golden sirup is the trade name for concentrated product after hydrolysis of saccharose, the so called artificial honey. ⁱ In case of sirups, sweetening capacity is recalculated to dry matter. ^{j} Related to content of a flat tea spoon (some 4 g); common units used in food industry are applied; approximate conversion to SI units is 1 [cal/spoon ] ^{~} 1 [J/g]. | | | | | | | |

### (Náhradní sladidla, Copíková J., Moravcová J., Wimmer Z., Chem. Listy 107, 867-874 (2013))

### Description of the Invention

A new sweetener of natural origin imitating taste of classic beet or cane sugar was created, but with energy value up to 90% lower. Moreover, the sweetener taste has a large amount of overtones and fruity taste which the consumers preferred against the classic cane sugar. Thus it is a suitable option against classic beet or cane sugar, it surpasses qualitative parameters of sugar, its caloric value and glycemic index in many aspects. The inventors managed to find a combination of components with suitable qualitative and quantitative proportions where this new sweetener attacks quality of sugar but it has low glycemic load and low energy value. A whole third of all evaluators preferred the sweetener to cane sugar in a sensory test. The sweetening capacity of the sweetener has intensity 1 to 20 according to proportions among the components. Thus it has up to o 20times higher sweetening performance than common sugar, consisting of saccharose. Energy value of the sweetener with the same sweetening capacity as sugar as decreased by up to more than 90% when the energy value of 1 g of sweetener at sweetening capacity 10 is about 13 kJ. A mess of sweetener that sweets food or drink as much as a spoon of sugar with 102 kJ has energy value 8 kJ which amounts to 8% of the energy of sugar with the same sweetening performance or sweetening capacity. An important benefit of the sweetener is its natural base and natural fruity flavour. Both consumers and experts have tested the sweetener in a sensory way and one third of the evaluators have assessed it as preferential in comparison with cane sugar. That were the fruity flavour and pleasant taste that were evaluated positive. The results show that the sweetener has very good position among sweeteners generally because it has very low energy value and very pleasant taste without many foul tastes.

The suggested sweetener imitates sugar in its full profile concerning sensory - above all in its fullness, aftertaste, and the like. The sweetener is formed through functional and synergic combination of three, at least, components: wort, thaumatin and stevioglycoside which generates the full taste profile of the sweetener of natural origin with low energy value and high sweetening capacity. Each of the components has its unique function in the sweetener. It is advantageous to use the sweetener in a mixture with other substances either of sweet or non-sweet nature when the sweetener can be completed with other sweeteners or beet or cane sugar or their mixture. The sweetener can also be mixed with non-sweetening components, for example fibre and it can be diluted suitably and some conserving agents can be added and the like.

Rebaudioside mainly provides the sweetening capacity. Its taste is markedly sweet but other sensory features of sugar lack. Thaumatin, even at very low concentration (about 0.5 mg/l in a drink containing approximately 18 g of barley wort and 0.290 g of rebaudioside D), causes rounding of sweet taste of rebaudioside D at the cost of slight decrease of sweet taste intensity and this is no fault. Thaumatin itself is almost tasteless in this concentration if compared with drink water. The last component is dried wort. It provides for fullness of the sweetener - provides for taste fullness and approximates the sweetener sugar and brings also a bit of resulting sweetness.

The outcome is the sweetener with sweetening capacity equivalent to sugar or higher, with round sweet taste and fullness, as sugar provides usually in sirups.

The basic sweetener consists of a mixture of wort, thaumatin and rebaudioside. The usually used wort is concentrated wort with 40 wt.% of dry matter, at least. It is advantageous if 80 wt.% concentrated wort or dried 98 wt.% wort, at least, is used. It is advantageous if the wort is of barley, but wort of other plants can also be used. It is advantageous if rebaudioside, thus one of the components of the Stevia extract, is used in form of Rebaudioside D.

It was found that synergy occurs among components of the sweetener through increasing sweetening capacity which allows for further decrease of quantity of thaumatin, and thus decrease of sweet taste sticking and decrease of sweet taste decay.

The sweetener contains three, at least, components with relative share of 95 wt.% of wort, at least, and up to 99.9 wt.% of wort, 0.01 wt.% of rebaudioside, at least, and up to 5 wt.% of rebaudioside, and 0.0004 wt.% of thaumatin, at least, and up to 0.32 wt.% of thaumatin.

It is advantageous if the sweetener contains 97 to 99 wt.% of wort, 0.1 to 3 wt.% of rebaudioside and 0.004 to 0.005 wt.% of thaumatin. This corresponds to sweetening capacity 1 to 10.

It is advantageous if cyclodextrin is added to the base three-component mixture for further rounding and homogenisation of taste, namely in the amount of 0.04 to 0.1 wt.%, at least. It is advantageous if the quantity of cyclodextrin is 10 x higher than that of thaumatin.

Within the given limits, the glycemic index of the sweetener depends on the wort only, and it does not almost change in any possible combination of the components and keeps at 40-42.

Modifications of the sweetener with the optimum share of components with various intensity of sweetening capacity per sweetener weight were created. One of the options is the weight sweetening capacity 1, for the situation when it is necessary to sweet with the same amount of sweetener as sugar to achieve the same sweetening performance when the weight share of components of 80 wt.% wort: thaumatin : rebaudioside D is 99.93 : 0.00084 : 0.0624.

In preparation of a sweetener with 3.5times higher sweetening capacity compared with sugar, weight share of components 80 wt.% wort : thaumatin : rebaudioside D is 99.23 : 0.0046 : 0.76. In preparation of a sweetener with 8.3times sweetening capacity compared with sugar, thus sweetening capacity 8.3, weight share of components 80 wt.% wort : thaumatin : rebaudioside D is 97.87 : 0.0046 : 2.12. In preparation of a sweetener with 8.3times sweetening capacity, thus 4.7times expected calculated sweetening capacity weight share of components 98 wt.% wort: thaumatin : rebaudioside D is this : 97.47 : 0.0043 : 2.52.

It is advantageous to prepare a mixture of 10.6 g 80 wt.% wort, of 0.0005 g thaumatin and of 0.23 g rebaudioside D. This means that weight share in dry matter is 8.48 g of 100 wt.% wort, of 0.0005 g of thaumatin and of 0.23 g of rebaudioside D.

A dilution sensory test of the sweetener found that the actual sweetening capacity of the sweetener is about twice higher than the expected calculated sweetening capacity of the sweetener that has been determined as the sum of sweetening capacities of the components according to their shots. Ten expert sensory assessors have evaluated the test, they have assessed the sweetening capacity of a sugar solution and the sweetening capacity of sweetener solution. Concentration of 20 g/l of sugar and 4 g/l of sweetener were compared. In the model, the sweetener solution was diluted into three concentrations for comparison with the sugar solution. Concentration of sweetener solutions against sugar solutions was in dilution 3× in ratio 1:15, in dilution 2× in ratio 1:10 and in dilution 1.5× in ratio 1:7.5. In dilution to 10× lower sweetener concentration compared with sugar, the sweetening capacity of both solutions was assessed as equal in 20% of cases and in dilution to 7.5× lower sweetener concentration compared with sugar the sweetening capacity was assessed as equal in 40% of cases. Details are given in the table below:

| dilution | sweetener solution concentration (g/l) | solution of standard concentration (g/l) | ratio against concentration of standard/ sweetening capacity | sweetener assessed as sweeter | standard assessed as sweeter | identical sweetening capacity |
|---|---|---|---|---|---|---|
| 3 | 1.3 | 20 | **15** | 10% | 80% | **10%** |
| 2 | 2.0 | 20 | **10** | 30% | 50% | **20%** |
| 1.5 | 2.7 | 20 | **7.5** | 40% | 20% | **40%** |
| 0 | 4.0 | 20 | **5** | | | |

This analysis shows that synergy among present components occurs in the formed sweetener and that it increases the expected sweetening capacity. Thus the solution with concentration 2 g/l seemed to be equal to sugar solution with concentration 20 g/l in 20% cases and the higher sweetening capacity of the sweetener against sugar was in ratio 3:5. Sweetener solution with concentration 2.7 g/l seemed to be equal to sugar solution with concentration 20 g/l in 40% cases and the higher sweetening capacity of the sweetener against sugar was in ratio 4:2. Thus we passed to the detectable limit of these fine differences in sweetening capacity. The value of average weighted of the determined sweetening capacity of the sweetener of these two outputs amounts to 8.33 under calculated sweetening capacity 4.7, and this shows that the actual sweetening capacity is even 1.77× higher.

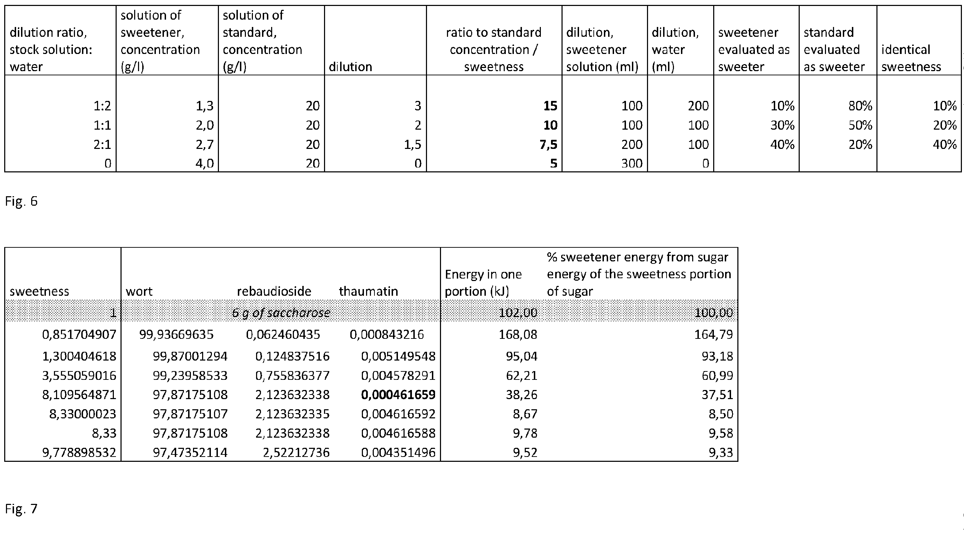

For sweetening capacity 10 in ratio of components given in weight of their dry form wort : stevioglycoside : thaumatin 97.47 : 2.5: 0.043, the sweetener has energy value 10× lower than sugar but relatively high share of wort provides for full flavour profile of the sweetener. Detail results are presented in Fig. 7.

Further the sensory profile of the sweetener was analysed and again compared with cane sugar. It was found that sweetener has replaced sugar relatively well concerning fullness of taste. Moreover, it contains acid shades which improve attractivity of the sweetener. Bitter foul taste that frequently appears in substitute sweeteners, are not much evident in the sweetener and it is not necessary to mask them using other common additives. The intensity of sweet taste has been assessed as very similar, intensity of aftertaste has been decreased subsequently through decrease of thaumatin amount.

Further the ratio of quantity of wort and quantity of rebaudioside was determined for values of sweetening capacity of wort 0.3 to 0.5 and rebaudioside 200 to 300. It was found that the sweetening capacity rises linearly with decreasing weight ratio of wort and rising rebaudioside from 100 to 97 parts of wort and 0.06 to 2.5 parts of rebaudioside. The outstanding part is thaumatin.

The sweetener is prepared through perfect mixing of its components, and wort is used as slightly concentrated where it thickens to a strongly viscous solution after rebaudioside and thaumatin are added and solved, or the formed solution is dried to powder or dried wort is used where all the components are loose and they are only mixed. This way formed mixtures can be instantised which increases their solubility in water medium and their volume rises approximately twice, resp. their powder density decreases.

### Summary of presented drawings

- Fig. 1:: Overview of quantitative composition of prepared sweeteners with variable sweetening capacity
- Fig. 1A:: Overview of quantitative composition of prepared sweetener 1
- Fig. 1B:: Overview of quantitative composition of prepared sweetener 2
- Fig. 1C:: Overview of quantitative composition of prepared sweetener 3
- Fig. 1D:: Overview of quantitative composition of prepared sweetener 4
- Fig. 1E:: Overview of quantitative composition of prepared sweetener 5
- Fig. 1F:: Overview of quantitative composition of prepared sweetener 6
- Fig. 1G:: Overview of quantitative composition of prepared sweetener 7
- Fig. 1H:: Overview of quantitative composition of prepared sweetener 8
- Fig. 1I:: Overview of quantitative composition of prepared sweetener 9

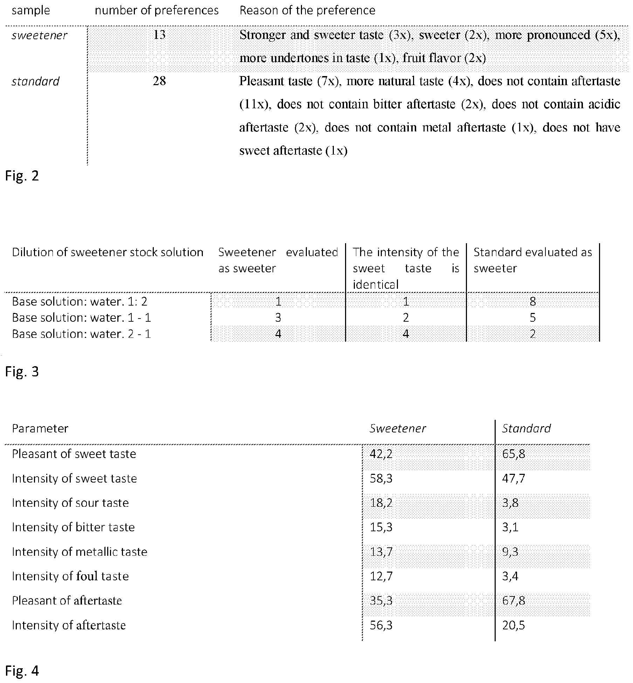

- Fig. 2:: Results of preferential test of sweetener solution and cane sugar solution in pair
- Fig. 3:: Results of dilution test to determine sweetening capacity of sweetener
- Fig. 4:: Results to determine sensory profile of sweetener compared with sugar

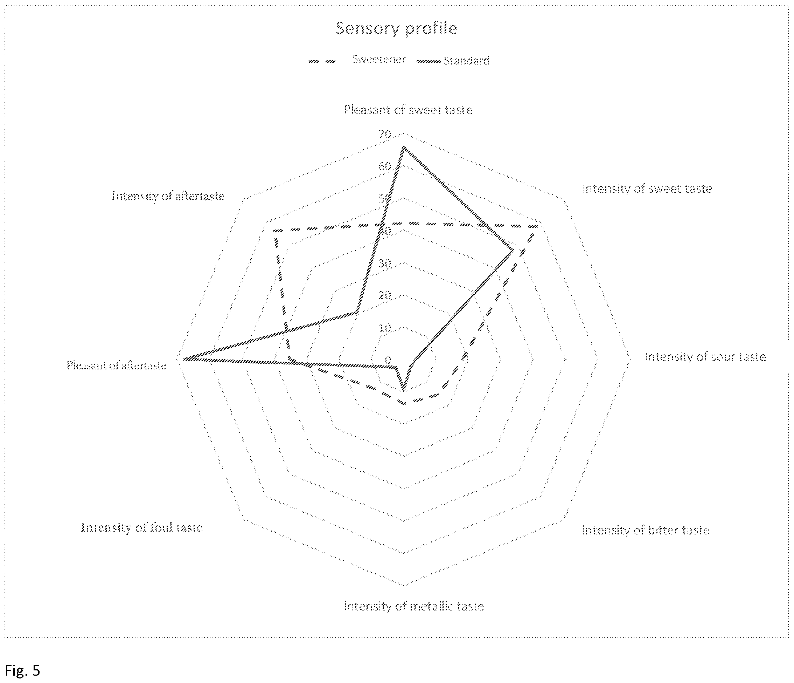

- Fig. 5:: Graph of sensory profiles of sweetener and sugar
- Fig. 6:: Detail data to determine sweetening capacity of sweetener
- Fig. 7:: Shares of components of prepared sweeteners and their energy values compared with sugar for equal sweetening capacity

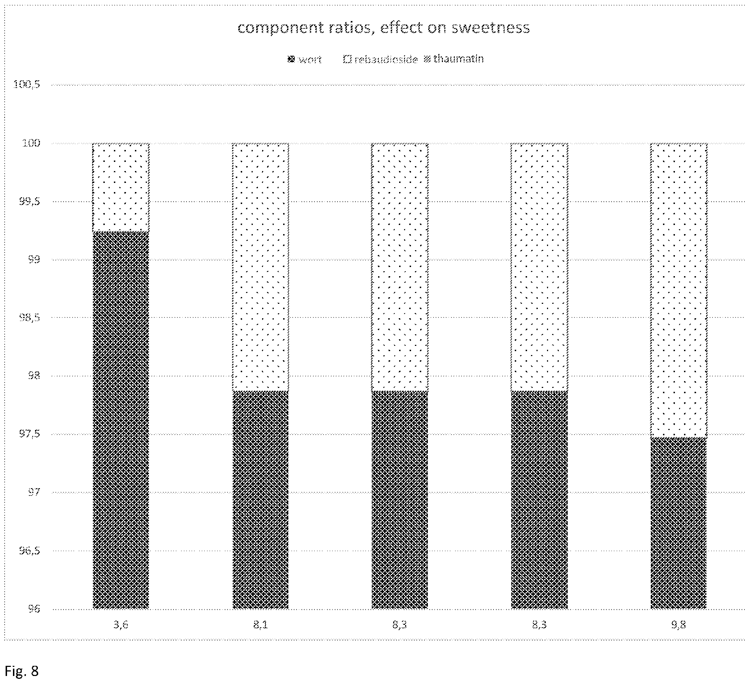

- Fig. 8:: Graph of shares of components of prepared sweeteners and their effect on sweetening capacity

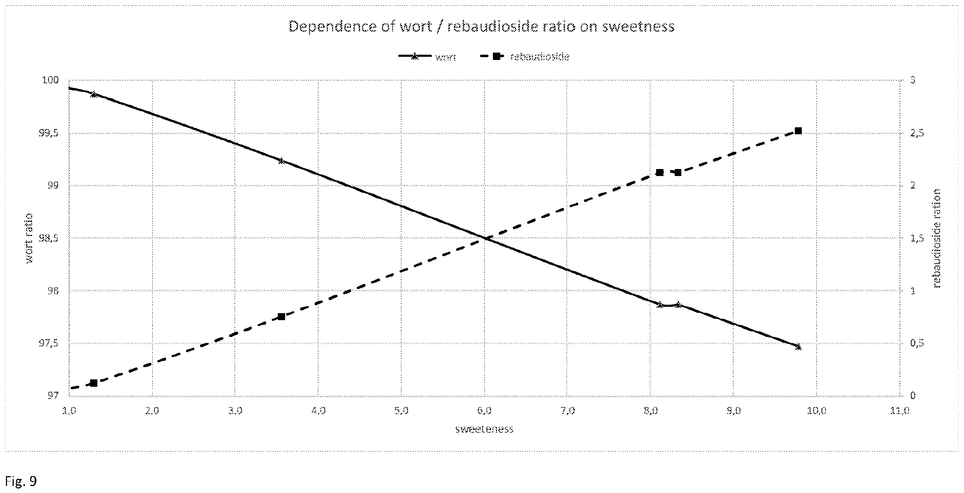

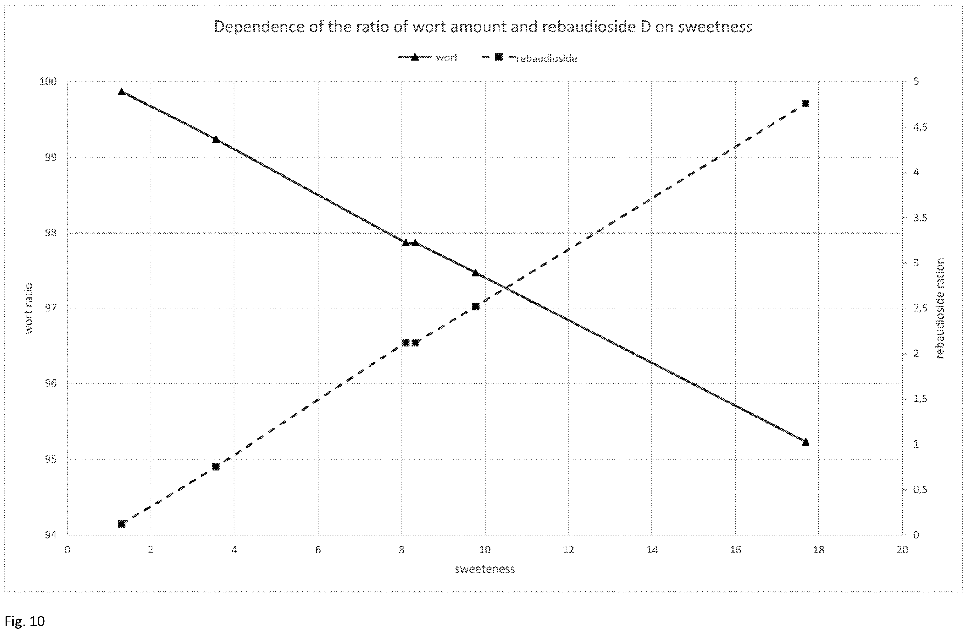

- Fig. 9:: Graph of effect of ratio of wort and rebaudioside D on sweetening capacity

### Examples of Invention Execution

### Example 1 Preparation of 42 wt.% wort

12wt.% wort was prepared of 16 kg of malt and 100 litres of water.

Barley wort was ground in a shred machine, poured into a boiling vessel with water heated to 36°C. Water with ground grout was heated with hot water to 51°C. After brewing, 1/3 was transferred into a heated filter tank and the residue went on mashing. After saccharification, mash began to boil and it was stepwise transferred into the filter tank at 78°C. Then solid components of extracted malt (extracted grains) in the acquired wort were filtered off clear wort. Extracted grains were damped with hot water and this running again was mixed with wort. The process was repeated twice, acquired extracts of wort were mixed. Acquired 12 wt.% wort was slightly evaporated in a vacuum evaporation device to concentration of 42 wt.%.

### Example 2a Sweetener dry - table

230 g of rebaudioside D and 50 g of 1 wt.% of thaumatin dispersed in fibre were dissolved in 20.2 kg solution of 42wt.% wort. After the components dissolved, the acquired solution was dried in a spray drying machine at temperature approximately 170°C when the dried instantised wort is cooled at the output to temperature approximately 100°C. After drying the acquired mixture instantised in an agglomeration chamber where the acquired mixture was wetted with steam or air with relative moisture 60 wt.% at temperature 55°C to 98 wt.% dry matter.

### Example 2b liquid sweetener

230 g of rebaudioside D and 50 g of 1 wt.% of thaumatin dispersed in fibre were dissolved in 20.2 kg solution of 42wt.% wort. After the components dissolved, the acquired solution was concentrated in a vacuum evaporation device to 80 wt.% dry matter.

### Example 3-1. Sweetener - liquid, sweetening capacity 8.3

20.2 g of 42 wt.% solution of concentrated wort was mixed with 2.123 g of rebaudioside D and 0.0046 g of thaumatin, the mixture was homogenised for 2 hours. A sweetener with calculated sweetening capacity 4.7 and sensory determined sweetening capacity 8.3 was prepared.

### Example 4-2. Sweetener - dry, sweetening capacity 10

11.2 g of dry 98 wt.% wort was mixed with 0.289 g of rebaudioside D and 0.0005 g of thaumatin. The prepared sweetener had calculated sweetening capacity 5.5 and sensory determined sweetening capacity 10.

### Example 5-3. Sweetener - liquid, sweetening capacity 8,3, round taste

15.03 g of 42 wt.% solution of concentrated wort was mixed with 0.169 g of rebaudioside D and 0.00036 g of thaumatin, the mixture was homogenised for 2 hours. The homogenised mixture was then concentrated in a vacuum evaporation device to solution with 80 wt.% wort. A sweetener with calculated sweetening capacity 4.7 and sensory determined sweetening capacity 8.3 was prepared. The sweetener was used for sensory testing where it was found that further rounding and balancing of taste occurred in comparison with 3rd sweetener from Example 5.

### Example 5.1 - 3.1. Sweetener - liquid, sweetening capacity 8.3

15.03 g of 42 wt.% solution of concentrated wort was mixed with 0.169 g of rebaudioside D, 0.00036 g of thaumatin and 0.0036 g of cyclodextrin, the mixture was homogenised for 2 hours. The homogenised mixture was then concentrated in a vacuum evaporation device to solution with 80 wt.% wort. A sweetener with calculated sweetening capacity 4.7 and sensory determined sweetening capacity 8.3 was prepared. This sweetener was used for sensory testing.

### Example 6-4. Sweetener - liquid, sweetening capacity 1.3

122 g of 42 wt.% solution of concentrated wort was mixed with 0.08 g of rebaudioside D and 0.0033 g of thaumatin, the mixture was homogenised for 20 minutes. The homogenised mixture was then concentrated in a vacuum evaporation device to solution with 80 wt.% wort. A sweetener with calculated sweetening capacity 0.74 and sensory determined sweetening capacity 1.3 was prepared.

### Example 7 - 5. Sweetener - dry, sweetening capacity 3.5

34.4 g of dry 98 wt.% wort was mixed with 0.262 g of rebaudioside D and 0.00158 g of thaumatin. The prepared sweetener had calculated sweetening capacity 2 and sensory determined sweetening capacity 3.6.

### Example 8-6. Sweetener - liquid, sweetening capacity 8

14.9 g of 42 wt.% solution of concentrated wort was mixed with 0.17 g of rebaudioside D and 0.000036 g of thaumatin, the mixture was homogenised for 1 hour. The homogenised mixture was then concentrated in a vacuum evaporation device to solution with 80 wt.% wort. A sweetener with calculated sweetening capacity 4.6 and sensory determined sweetening capacity 8.1 was prepared.

### Example 9-7. Sweetener - liquid, sweetening capacity 0.85

122 g of 42 wt.% solution of concentrated wort was mixed with 0.04 g of rebaudioside D and 0.00054 g of thaumatin, the mixture was homogenised for 20 minutes. The homogenised mixture was then in a vacuum evaporation device to solution with 80 wt.% wort. A sweetener with calculated sweetening capacity 0.48 and sensory determined sweetening capacity 0.85 was prepared.

### Example 10 - 8. Sweetener - liquid, sweetening capacity 17.7

0.9 g of dry 98 wt.% wort was mixed with 0.045 g of rebaudioside D and 0.000041 g of thaumatin. The prepared sweetener had calculated sweetening capacity 10 and sensory determined sweetening capacity 17.7.

### Example 11 - 9. Sweetener - liquid, sweetening capacity 5

15.03 g of 42 wt.% solution of concentrated wort was mixed with 0.169 g of rebaudioside D and 0.00036 g of thaumatin, the mixture was homogenised for 2 hours. A sweetener with calculated sweetening capacity 2.4 and sensory determined sweetening capacity 5.1 was prepared.

### Example 12 - Sensory assessment

The samples were assessed in the sensory laboratory attached to VSCHT Praha (University of Chemistry and Technology, Prague) with 12 boxes which is equipped according to the relevant international standard ISO 8589. The approach in all sensory analyses was in line with international ISO standards. The assessors were selected, trained and monitored according to international standard ISO 8586, and CSN ISO standard 5496 Sensory Analysis - Methodology - Initiation in problems and training of assessors in finding and distinguishing odour.

### Example 13 - Preferential test

Water solutions of sweetener (8 g/100 ml) and standard (2 g/100 ml) were prepared. A sensory panel of consumers was established, with 41 members. The samples were assessed from degusting vessels and these were marked with a four-digit code (taken from tables of random numbers) for the sensory assessment purposes. The assessors were first given the standard solution. After degusting, the solution with sweetener was presented to them. The assessors should choose which of the tested samples has more pleasant taste for them and why. The outcome is given in the table:

### Assessment of preferences

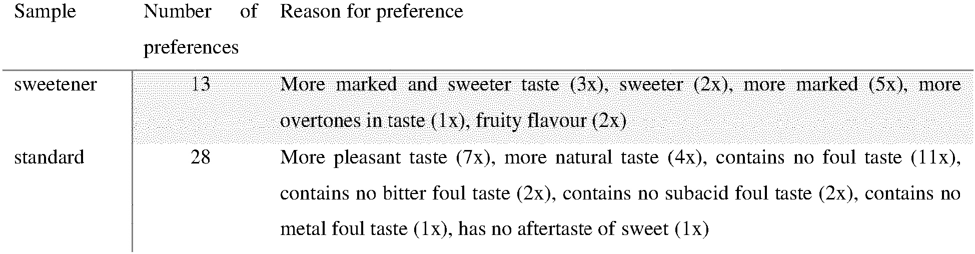

### Example 14 - Determination of sensory profile

### Testing were performed with a sensory panel of 10 consumers.

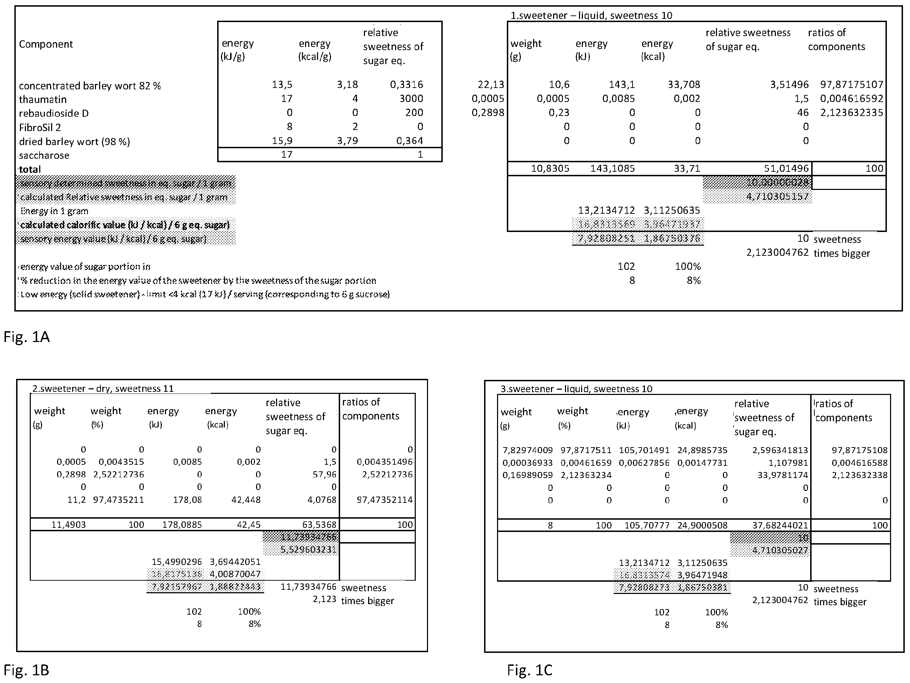

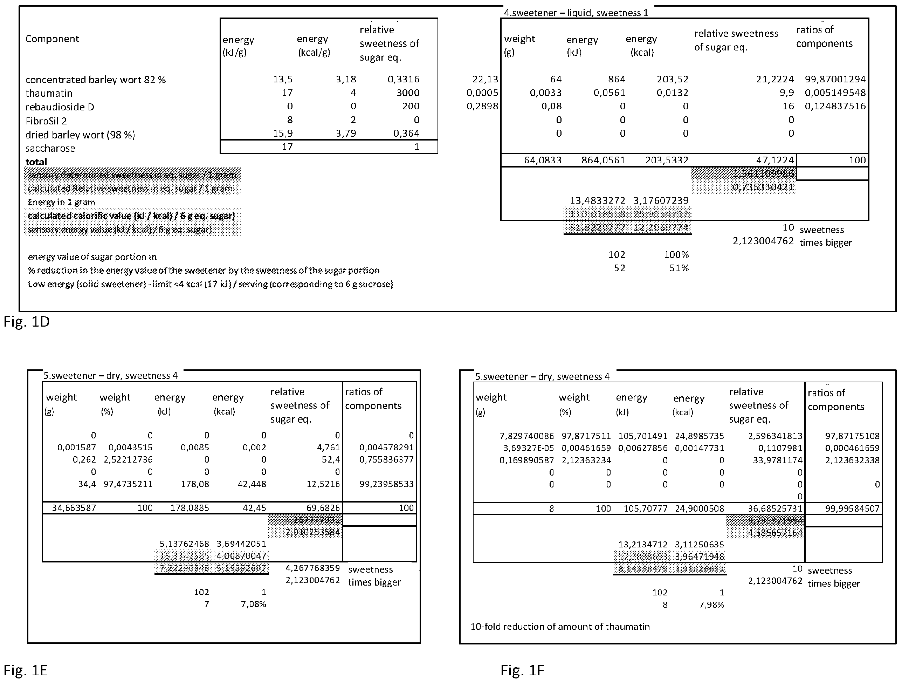

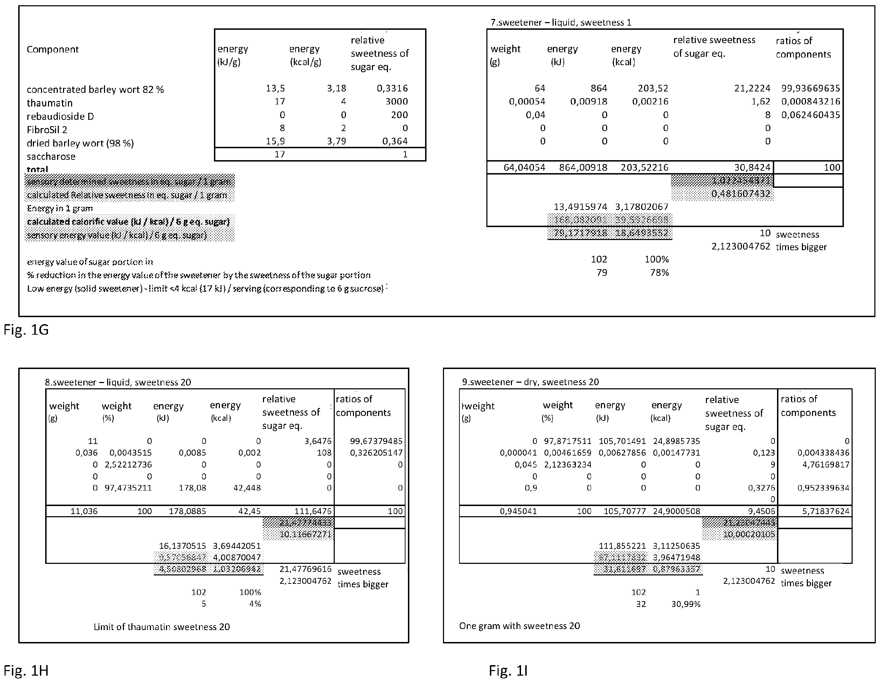

Water solutions of sweetener (x g/100 ml) and of standard (2 g/100 ml) were prepared. The assessors first were given the standard solution. After degusting, the solution with sweetener was presented to them. The assessment was performed in a method of a profile where they assessed pleasantness or intensity of the descriptors using non-structured graphic scales with 100 mm length. The outcome is given in Table 2 and in Figure 1.

The assessment descriptors were as below:
Pleasantness of sweet taste (0 unpleasant - 100 very pleasant)
Intensity of sweet taste (0 impercetible - 100 very strong)
Intensity of acid taste (0 impercetible - 100 very strong)
Intensity of bitter taste (0 impercetible - 100 very strong)
Intensity of metal taste (0 impercetible - 100 very strong)
Intensity of foul taste (0 impercetible - 100 very strong)
Pleasantness of aftertaste (0 unpleasant - 100 very pleasant)
Intensity of aftertaste (0 impercetible - 100 very strong)

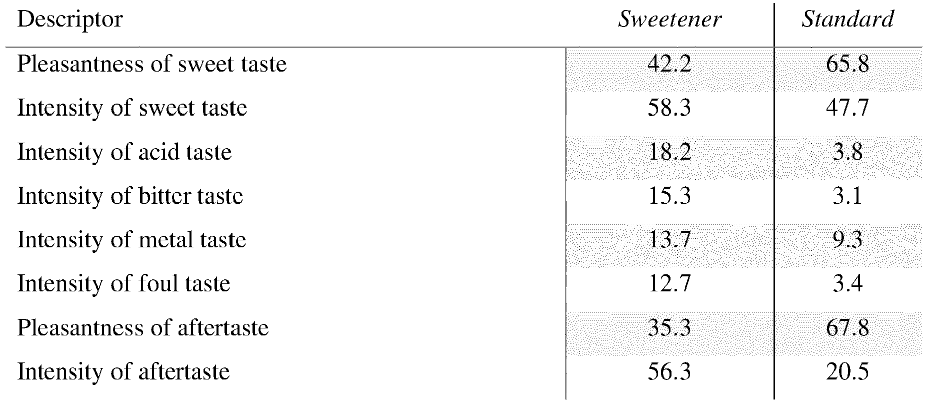

### Example 15 - Dilution test, to determine sweetening capacity

The basic water solution of the sweetener (8 g/ 2 1) and of the standard (2 g/100 ml) were prepared. The basic solution of the sweetener was subsequently diluted with water in ratio basic solution : water 2:1 (v/v), further 1:1 (v/v) and 1:2 (v/v). The samples were prepared into coded degustation vessels. Comparison of taste was performed using a pair test. Sweet taste was compared. The assessors were first given the standard solution. After degusting, the solution with sweetener was presented to them. The outcome is given in the table below.

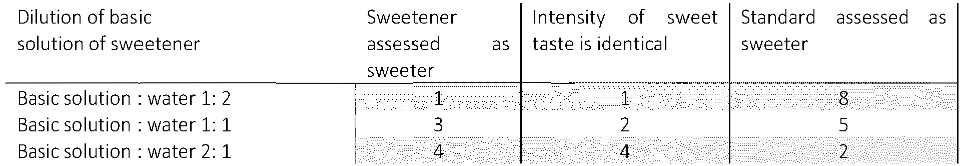

### Applicability in Industry

The sweetener can be used in the food industry for sweetening or final sweetening of food and drinks or as a table sweetener.

## Claims

1. A sweetener of natural origin with gustatory profile that imitates sugar with fruity flavours with up to 20times higher sweetening capacity as compared with sugar **characterised by the fact that** it is comprised, at least, wort, steviolglycoside and thaumatin in shares of 95 to 99.99 wt.% of wort, 0.01 to 5 wt.% of steviolglycoside and 0.0003 to 0.005 wt.% of thaumatin.

2. The sweetener of natural origin according to claim 1 **characterised by the fact that** the share of wort is 97 to 99 wt.%, the share of steviolglycoside is 0.1 to 3 wt.% and the share of thaumatin is 0.004 to 0.005 wt.%.

3. The sweetener of natural origin according to claim 2 **characterised by the fact that** the share of worth is 97.5 to 98 wt.%, the share of steviolglycoside is 2 to 2.2 wt.% and the share of thaumatin is 0.004 to 0.005 wt.%.

4. The sweetener of natural origin according to claim 1 **characterised by the fact that it is** comprised 0.04 to 0.05 wt.% of cyclodextrin.

5. The sweetener of natural origin according to claim 1 **characterised by the fact that** a weight ratio of wort to steviolglycoside is 20 to 800 :1 and a weight ratio of wort to thaumatin is 10 000 to 300 000 : 1.

6. The sweetener of natural origin according to claim 4 **characterised by the fact that** a weight ratio of wort to cyclodextrin is 1000 to 30 000 :1.

7. The sweetener of natural origin according to claim 5 **characterised by the fact that the** weight ratio of wort to steviolglycoside is 20 to 46 : 1.

8. The sweetener of natural origin according to claim 1 **characterised by the fact that** wort is comprised at least 80 wt.% of concentrated wort solution.

9. The sweetener of natural origin according to claim 1 **characterised by the fact that** wort is dried to at least 90 wt.% of dry matter.

10. The sweetener of natural origin according to claim 1 **characterised by the fact that** wort is made from barley.

11. The sweetener of natural origin according to claim 1 **characterised by the fact that** steviolglycoside is rebaudioside D or rebaudioside M or rebaudioside E or rebaudioside A or their mixture.

12. The sweetener of natural origin according to claim 11 **characterised by the fact that** steviolglycoside is rebaudioside D.

13. The sweetener of natural origin according to claim 1 **characterised by the fact that** it is involved in fibre in quantity of at least 40 wt.%.

14. The sweetener of natural origin according to claim 1 **characterised by the fact that** it is involved in water solution in quantity of at least 50 vol.%.

15. Use of the sweetener according to claim 1 to sweet drinks or as a table sweetener.

## Patentansprüche

1. Süßstoff natürlichen Ursprungs mit Geschmacksprofil, das Zucker mit fruchtigen Aromen mit bis zu 20 mal höherer Süßungskapazität im Vergleich zu Zucker imitiert, **dadurch gekennzeichnet, dass** er mindestens aus Würze, Steviolglycosid und Thaumatin in Anteilen von 95 bis 99,99 Gew.-% Würze, 0,01 bis 5 Gew.-% Steviolglycosid und 0,0003 bis 0,005 Gew.-% Thaumatin besteht.

2. Süßstoff natürlichen Ursprungs nach Anspruch 1, **dadurch gekennzeichnet, dass** der Würzeanteil 97 bis 99 Gew.-%, der Steviolglycosidanteil 0,1 bis 3 Gew.-% und der Thaumatinanteil 0,004 bis 0,005 Gew.-% beträgt.%.

3. Süßstoff natürlichen Ursprungs nach Anspruch 2, **dadurch gekennzeichnet, dass** der Würzeanteil 97,5 bis 98 Gew.-%, der Anteil an Steviolglycosid 2 bis 2,2 Gew.-% und der Anteil an Thaumatin 0,004 bis 0,005 Gew.-% beträgt.%.

4. Süßstoff natürlichen Ursprungs nach Anspruch 1, **dadurch gekennzeichnet, dass** er 0,04 bis 0,05 Gew.-% Cyclodextrin enthält.

5. Süßstoff natürlichen Ursprungs nach Anspruch 1, **dadurch gekennzeichnet, dass** das Gewichtsverhältnis von Würze zu Steviolglycosid 20 bis 800 1 und das Gewichtsverhältnis von Würze zu Thaumatin 10.000 bis 300.000 : 1 beträgt.

6. Süßstoff natürlichen Ursprungs nach Anspruch 4, **dadurch gekennzeichnet, dass** das Gewichtsverhältnis von Würze zu Cyclodextrin 1.000 bis 30.000 : 1 beträgt.

7. Süßstoff natürlichen Ursprungs nach Anspruch 5, **dadurch gekennzeichnet, dass** das Gewichtsverhältnis von Würze zu Steviolglycosid 20 bis 46 : 1 beträgt.

8. Süßstoff natürlichen Ursprungs nach Anspruch 1, **dadurch gekennzeichnet, dass** die Würze mindestens 80 Gew.-% konzentrierte Würzelösung enthält.

9. Süßstoff natürlichen Ursprungs nach Anspruch 1, **dadurch gekennzeichnet, dass** die Würze zu mindestens 90 Gew.-% der Trockensubstanz getrocknet ist.

10. Süßstoff natürlichen Ursprungs nach Anspruch 1, **dadurch gekennzeichnet, dass** die Würze aus Gerste hergestellt ist.

11. Süßstoff natürlichen Ursprungs nach Anspruch 1, **dadurch gekennzeichnet, dass** Steviolglycosid Rebaudiosid D oder Rebaudiosid M oder Rebaudiosid E oder Rebaudiosid A oder deren Mischung ist.

12. Süßstoff natürlichen Ursprungs nach Anspruch 11, **dadurch gekennzeichnet, dass** Steviolglycosid Rebaudiosid D ist.

13. Süßstoff natürlichen Ursprungs nach Anspruch 1, **dadurch gekennzeichnet, dass** er in einer Menge von mindestens 40 Gew.-% in Ballaststoffen enthalten ist.%.

14. Süßstoff natürlichen Ursprungs nach Anspruch 1, **dadurch gekennzeichnet, dass** er in einer Menge von mindestens 50 Vol.-% in Wasserlösung enthalten ist.%.

15. Verwendung des Süßungsmittels nach Anspruch 1 für Süßgetränke oder als Tafelsüße.

## Revendications

1. Un édulcorant d'origine naturelle avec un profil gustatif qui imite le sucre. Un goût fruité avec jusqu'à 20 fois la capacité d'édulcorer comparé à du sucre, **caractérisé par le fait qu'**il est compris, au moins, d'herbe, de glycoside de stéviol et de thaumatine dans une proportion de 95 à 99,99 % d'herbe, de 0,01 à 5 pds % de glycoside de stéviol et de 0,0003 à 0,005 pds % de thaumatine.

2. L'édulcorant d'origine naturelle selon la revendication 1, **caractérisé par le fait que** la part d'herbe est de 97 à 99 pds %, la part de glycoside de stéviol est de 0,1 à 3 pds % et la part de thaumatine est de 0,004 à 0,005 pds %.

3. L'édulcorant d'origine naturelle selon la revendication 2, **caractérisé par le fait que** la part d'herbe est de 97,5 à 98 pds %, la part de glycoside de stéviol est de 2 à 2,2 pds % et la part de thaumatine est de 0,004 à 0,005 pds %.

4. L'édulcorant d'origine naturelle selon la revendication 1, **caractérisé par le fait qu'**il est compris entre 0,04 et 0,05 pds % de cyclodextrine.

5. L'édulcorant d'origine naturelle selon la revendication 1, **caractérisé par le fait que** le rapport pondéral de l'herbe par rapport au glycoside de stéviol est de 20 à 800:1 et le rapport pondéral de l'herbe à la thaumatine est de 10 000 à 300 000:1.

6. L'édulcorant d'origine naturelle selon la revendication 4, **caractérisé par le fait que** le rapport pondéral de l'herbe à la cyclodextrine est de 1 000 à 30 000:1.

7. L'édulcorant d'origine naturelle selon la revendication 5, **caractérisé par le fait que** le rapport pondéral de l'herbe au glycoside de stéviol est de 20 à 46:1.

8. L'édulcorant d'origine naturelle selon la revendication 1, **caractérisé par le fait que** l'herbe se compose d'au moins 80 pds % de la solution concentrée d'herbe.

9. L'édulcorant d'origine naturelle selon la revendication 1, **caractérisé par le fait que** l'herbe est séchée à au moins 90 pds % de matériau sec.

10. L'édulcorant d'origine naturelle selon la revendication 1, **caractérisé par le fait que** le l'herbe est faite à partir d'orge.

11. L'édulcorant d'origine naturelle selon la revendication 1, **caractérisé par le fait que** le glycoside de stéviol est du rebaudioside D, ou rebaudioside M, ou rebaudioside E, ou rebaudioside A, ou leur mélange.

12. L'édulcorant d'origine naturelle selon la revendication 11, **caractérisé par le fait que** le glycoside de stéviol est du rebaudioside D.

13. L'édulcorant d'origine naturelle selon la revendication 1, **caractérisé par le fait qu'**il est impliqué en fibre en quantité d'au moins 40 pds %.

14. L'édulcorant d'origine naturelle selon la revendication 1, **caractérisé par le fait qu'**il est impliqué dans une solution d'eau en quantité d'au moins 50 vol. %.

15. L'utilisation de l'édulcorant selon la revendication 1 est de sucrer des boissons ou en tant qu'édulcorant de table.
